# EUROPEAN PATENT APPLICATION

(11) **EP 4 451 373 A1**
(43) Date of publication of application: **23.10.2024**
(21) Application number: 21967503.0
(22) Date of filing: 13.12.2021
(51) Int. Cl.: H01M 4/36, H01M 4/50

(54) **ELECTROCHEMICAL DEVICE AND ELECTRONIC DEVICE**

(71) Applicant: Ningde Amperex Technology Limited, Zhangwan Town, Jiaocheng District Ningde City Fujian 352100 (CN)
(72) Inventor: LIU, Wenyuan, Ningde City, Fujian 352100 (CN); LANG, Ye, Ningde City, Fujian 352100 (CN); YUAN, Guoxia, Ningde City, Fujian 352100 (CN); XU, Leimin, Ningde City, Fujian 352100 (CN)
(74) Representative: Klunker IP Patentanwälte PartG mbB
(86) International application number: PCT/CN2021/137528
(87) International publication number: WO 2023/108361

(57) **Abstract**

An electrochemical device includes a positive electrode plate and an electrolyte, where the positive electrode plate includes a positive electrode material layer, the positive electrode material layer includes a positive electrode active material, and the positive electrode active material contains element Mn and element X, where element X includes at least one of element Co or element Al, and a molar ratio of element X to element Mn is A%, A ranging from 0.1 to 10; and the electrolyte includes a boron-containing lithium salt. Under a synergistic effect of the positive electrode active material and the electrolyte, rate performance and cycling performance of the electrochemical device can be improved.

## Description

### TECHNICAL FIELD

This application relates to the electrochemical field, and in particular, to an electrochemical device and an electronic device.

### BACKGROUND

Lithium-ion batteries are widely applied in fields of wearable devices, smart phones, drones, electric vehicles, large-scale energy storage devices, and the like because of their advantages such as high energy density, long cycle life, and zero memory effect, and have become a new type of green chemical power source with the greatest development potential in the world today. Meanwhile, higher requirements are imposed on performance of lithium-ion batteries.

Effective cooperation between a positive electrode active material and an electrolyte in a lithium-ion battery has a great influence on performance of the lithium-ion battery. With increasing number of cycles of the lithium-ion battery, a protection film on a surface of a positive electrode and/or negative electrode is damaged, and direct current resistance of the lithium-ion battery increases, leading to degradation in rate performance of the lithium-ion battery. Therefore, developing a positive electrode active material and an electrolyte system that are conducive to reducing growth of the direct current resistance of the lithium-ion battery and improving the rate performance after cycling has become an urgent problem to be resolved.

### SUMMARY

This application is intended to provide an electrochemical device and an electronic device, so as to improve rate performance of the electrochemical device.

A first aspect of this application provides an electrochemical device, including a positive electrode plate and an electrolyte, where the positive electrode plate includes a positive electrode material layer, the positive electrode material layer includes a positive electrode active material, and the positive electrode active material contains element Mn and element X, where element X includes at least one of element Co or element Al, and a molar ratio of element X to element Mn is A%, A ranging from 0.1 to 10; and the electrolyte includes a boron-containing lithium salt. Under a synergistic effect of the positive electrode active material and the electrolyte, both initial rate performance and cycling performance of the electrochemical device can be improved, and growth rate of direct current resistance can be decreased.

In some embodiments of this application, the boron-containing lithium salt includes at least one of lithium tetrafluoroborate, lithium difluorooxalatoborate, lithium bisoxalatoborate, or lithium tetraborate.

In some embodiments of this application, a mass ratio of the boron-containing lithium salt to the positive electrode active material ranges from 0.0001 to 0.01.

In some embodiments of this application, based on a mass of the electrolyte, a mass percentage of the boron-containing lithium salt ranges from 0.01% to 2.2%.

In some embodiments of this application, the positive electrode active material includes a lithium manganese oxide containing element X.

In some embodiments of this application, the positive electrode active material further contains element M1, where element M1 includes at least one of Nb, Mg, Ti, W, Ga, Zr, Y, V, Sr, Mo, Ru, Ag, Sn, Au, La, Ce, Pr, Nd, Sm, or Gd, and based on a number of moles of element Mn, a molar amount a1% of element M1 ranges from 0.1% to 2%. The positive electrode active material including the above element M1 and the molar amount of element M1 being within the above range facilitate alleviating dissolution of manganese from the positive electrode plate, thus improving the cycling performance of the electrochemical device.

In some embodiments of this application, the positive electrode active material includes a lithium manganese oxide containing element X and element M1.

In some embodiments of this application, the electrochemical device satisfies at least one of the following characteristics: (i) 0.14≤a1/A≤0.55; or (ii) element M1 contains element Nb, where based on the number of moles of element Mn, a molar amount of element Nb is a2%, satisfying 0.3≤a2/a1≤1. Values of al/A and/or a2/a1 being controlled within the above ranges facilitates improving the cycling performance and initial rate performance of the electrochemical device.

In some embodiments of this application, the positive electrode active material further contains element M2, where element M2 includes at least one of Fe, Cu, Cr, or Zn, and based on a number of moles of element Mn, a molar amount of element M2 is b1%.

In some embodiments of this application, the positive electrode active material contains element M1 and element M2, and 0.1<a1+b1≤2.05 is satisfied. Selection of the above element M2 and a total molar amount a1+b1 of element Mn and element M2 being controlled within the above range facilitate improving the cycling performance and initial rate performance of the electrochemical device and decreasing the growth rate of direct current resistance.

In some embodiments of this application, the positive electrode active material includes a lithium manganese oxide containing element X and element M2.

In some embodiments of this application, the positive electrode active material includes a lithium manganese oxide containing element X, element M1, and element M2.

In some embodiments of this application, the positive electrode active material further contains element M3, where element M3 includes at least one of F, P, S, or B, and based on a number of moles of element Mn, a molar amount c1% of element M3 ranges from 0.1% to 2%. Selection of the above element M3, the mass ratio of the boron-containing lithium salt to the positive electrode active material being controlled within a range of 0.0001 to 0.01, and the molar amount c1% of element M3 being controlled within the above range facilitate forming a structurally stable positive electrode active material, forming a protection film on the surface of the positive electrode active material, and alleviating dissolution of manganese from the positive electrode plate, so that the cycling performance of the electrochemical device is improved.

In some embodiments of this application, the positive electrode active material includes a lithium manganese oxide containing element X and element M3.

In some embodiments of this application, the positive electrode active material includes a lithium manganese oxide containing element X, element M1, and element M3.

In some embodiments of this application, the positive electrode active material includes a lithium manganese oxide containing element X, element M2, and element M3.

In some embodiments of this application, the positive electrode active material includes a lithium manganese oxide containing element X, element M1, element M2, and element M3.

In some embodiments of this application, the positive electrode active material contains element M1 and element M3 and satisfies at least one of the following characteristics: (iii) 0.1≤a1+c1≤4; or (iv) element M3 contains element F, where based on the number of moles of element Mn, a molar amount of element F is c2%, satisfying 0.05≤c2/c1≤0.5. Value of a1+c1 and/or value of c2/c1 being controlled within the above ranges facilitates improving the cycling performance of the electrochemical device.

In some embodiments of this application, the positive electrode active material includes secondary particles, where an average particle size of primary particles in the secondary particles is D1, and the positive electrode active material satisfies at least one of the following characteristics: (1) Dᵥ50 of the positive electrode active material ranges from 4 µm to 15 µm; (2) the average particle size D1 of the primary particles ranges from 200 nm to 2 µm; or (3) 4≤Dᵥ50/D1≤50, where Dᵥ50 is a particle size of the positive electrode active material at 50% in the cumulative volume distribution as determined using a laser scattering particle size analyzer. Values of Dᵥ50, D1, and Dᵥ50/D1 of the positive electrode active material being controlled within the above ranges facilitate improving the initial rate performance and the cycling performance of the electrochemical device.

In some embodiments of this application, the electrolyte further includes a sulfur-oxygen double bond-containing compound, where the sulfur-oxygen double bond-containing compound includes at least one of 1,3-propane sultone, propenyl-1,3-sultone, or ethylene sulfate, and based on a mass of the electrolyte, a mass percentage of the sulfur-oxygen double bond-containing compound ranges from 0.01% to 2%. Selection of the above sulfur-oxygen double bond-containing compound and the mass percentage thereof being controlled within the above range can improve the initial rate performance and cycling performance of the electrochemical device and decrease the growth rate of direct current resistance.

A second aspect of this application provides an electronic device, including the electrochemical device according to any one of embodiments of this application.

A first aspect of this application provides an electrochemical device, including a positive electrode plate and an electrolyte, where the positive electrode plate includes a positive electrode material layer, the positive electrode material layer includes a positive electrode active material, and the positive electrode active material contains element Mn and element X, where element X includes at least one of element Co or element Al, and a molar ratio of element X to element Mn is A%, A ranging from 0.1 to 10; and the electrolyte includes a boron-containing lithium salt, where a mass ratio of the boron-containing lithium salt to the positive electrode active material ranges from 0.0001 to 0.01. During an initial stage of charge and discharge of the electrochemical device, a synergistic effect of the positive electrode active material and the electrolyte facilitates forming a protection film on a negative electrode, and during cycling of the electrochemical device, the synergistic effect facilitates mending the protection film on the negative electrode and slowing down increase of interface impedance of the electrochemical device during cycling, so as to relieve a problem of rate performance degradation in the electrochemical device during cycling and improve structural stability of the positive electrode active material. In this way, both the initial rate performance and the cycling performance of the electrochemical device are improved, and the growth rate of direct current resistance can be decreased.

### DESCRIPTION OF EMBODIMENTS

To make the objectives, technical solutions, and advantages of this application more comprehensible, the following describes this application in detail with embodiments listed. Apparently, the described embodiments are merely some but not all of the embodiments of this application. All other embodiments obtained by persons of ordinary skill in the art based on the embodiments of this application shall fall within the protection scope of this application.

It should be noted that, in the specific embodiments of this application, an example in which a lithium-ion battery is used as an electrochemical device is used to illustrate this application. However, the electrochemical device in this application is not limited to the lithium-ion battery.

A first aspect of this application provides an electrochemical device, including a positive electrode plate and an electrolyte, where the positive electrode plate includes a positive electrode material layer, the positive electrode material layer includes a positive electrode active material, and the positive electrode active material contains element Mn and element X, where element X includes at least one of element Co or element Al, and a molar ratio of element X to element Mn is A%, A ranging from 0.1 to 10, preferably, 1 to 5; and the electrolyte includes a boron-containing lithium salt.

In some embodiments of this application, the boron-containing lithium salt includes at least one of lithium tetrafluoroborate (LiBF₄), lithium difluorooxalatoborate (LiDFOB), lithium bisoxalatoborate (LiBOB), or lithium tetraborate (Li₂B₄O₇).

In some embodiments of this application, a mass ratio of the boron-containing lithium salt to the positive electrode active material ranges from 0.0001 to 0.01. For example, the molar ratio A of element X to element Mn may be 0.1, 0.5, 1, 3, 5, 7, 10, or in a range defined by any two of the foregoing values. The mass ratio of the boron-containing lithium salt to the positive electrode active material may be 0.0001, 0.001, 0.005, 0.01, or in a range defined by any two of the foregoing values.

Regardless of any theory, the inventors of this application have found that when the molar ratio of element X and element Mn in the positive electrode active material is A%, A ranging from 0.1 to 10, the electrolyte includes the boron-containing lithium salt, and the mass ratio of the boron-containing lithium salt to the positive electrode active material ranges from 0.0001 to 0.01, during an initial stage of charge and discharge of the electrochemical device, a synergistic effect of the positive electrode active material and the electrolyte facilitates forming a protection film on a negative electrode; and during cycling of the electrochemical device, the synergistic effect facilitates mending the protection film and slowing down increase of interface impedance of the electrochemical device during cycling, so as to relieve a problem of rate performance degradation in the electrochemical device during cycling and improve structural stability of the positive electrode active material. In this way, both the initial rate performance and the cycling performance of the electrochemical device are improved. In an electrochemical device, for example, a lithium-ion battery, a mass of the boron-containing lithium salt in the electrolyte may be determined by the following methods: the lithium-ion battery is weighed and denoted as m0, and then the lithium-ion battery is disassembled, centrifugated, soaked in dimethyl carbonate solvent for 10 hours, and dried, followed by weighing and denoting as m1, where a total mass of the electrolyte is m0-m1. Tests for the electrolyte obtained by centrifugation using a gas chromatograph and an ion chromatograph are performed, so as to obtain a proportion of each component in the electrolyte. Mass of boron-containing lithium salt=total mass of electrolyte×proportion of boron-containing lithium salt.

In some embodiments of this application, the positive electrode active material includes at least one of lithium manganate containing element X or lithium manganese iron phosphate containing element X.

In some embodiments of this application, the positive electrode active material includes lithium manganate containing element X.

In some embodiments of this application, based on a mass of the electrolyte, a mass percentage of boron-containing lithium salt ranges from 0.01% to 2.2%. For example, the mass percentage of the boron-containing lithium salt may be 0.01%, 0.02%, 0.05%, 0.1%, 0.3%, 0.5%, 0.7%, 0.9%, 1.2%, 1.5%, 2.0%, 2.2%, or in a range defined by any two of the foregoing values. Regardless of any theory, the inventors of this application have found that with a proportion of the boron-containing lithium salt being in the range of 0.01% to 2.2%, especially being in a range of 0.05% to 0.9%, the electrochemical device has relatively good initial rate performance and cycling performance and a relatively low growth rate of direct current resistance.

In some embodiments of this application, the positive electrode active material further contains element M1, where element M1 includes at least one of Nb, Mg, Ti, W, Ga, Zr, Y, V, Sr, Mo, Ru, Ag, Sn, Au, La, Ce, Pr, Nd, Sm, or Gd, and based on a number of moles of element Mn, a molar amount a1% of element M1 ranges from 0.1% to 2%. For example, the molar amount a1% of element M1 may be 0.1%, 0.5%, 1%, 1.5%, 2%, or in a range defined by any two of the foregoing values. Regardless of any theory, the inventors of this application have found that the molar amount a1% of element M1 being undesirably low (for example, less than 0.1%) provides no obvious improvement on the performance of the electrochemical device. With the molar amount a1% of element M1 increasing, a synergistic effect of the positive electrode active material and the electrolyte facilitates forming a structurally stable protection film so as to alleviate dissolution of manganese from the positive electrode plate. The molar amount a1% of element M1 being undesirably high (for example, greater than 2%) affects full play of the initial rate performance and gram capacity of the electrochemical device. The positive electrode active material including the above element M1 and the molar amount of element M1 being within the above range facilitate alleviating dissolution of manganese from the positive electrode plate, thus improving the cycling performance of the electrochemical device.

In some embodiments of this application, the electrochemical device satisfies at least one of the following characteristics: (i) 0.14≤a1/A≤0.55; or (ii) element M1 contains element Nb, where based on a number of moles of element Mn, a molar amount of element Nb is a2, satisfying 0.3≤a2/a1≤1. For example, a value of al/A may be 0.14, 0.15, 0.2, 0.25, 0.3, 0.35, 0.4, 0.45, 0.5, 0.55, or in a range defined by any two of the foregoing values. For example, a value of a2/a1 may be 0.3, 0.4, 0.54, 0.6, 0.7, 0.8, 0.9, 1, or in a range defined by any two of the foregoing values. Regardless of any theory, the inventors of this application have found that the value of a1/A being undesirably small (for example, less than 0.14) provides no obvious improvement on the cycling performance of the electrochemical device. The value of a1/A being undesirably large (for example, greater than 0.55) may affect specific capacity of the electrochemical device. A value of a1/A being controlled within the above ranges facilitates improving the cycling performance and specific capacity of the electrochemical device. A value of a2/a1 being controlled within the above ranges also facilitates improving the cycling performance and specific capacity of the electrochemical device. The value of a2% is not particularly limited in this application, provided that the objectives of this application can be achieved. For example, a2% may be in a range of 0.03% to 2%.

In some embodiments of this application, the positive electrode active material further contains element M2, where element M2 includes at least one of Fe, Cu, Cr, or Zn, and based on the number of moles of element Mn, a molar amount of element M2 is b1%, satisfying 0.1<a1+b1≤2.05. For example, a value of a1+b1 may be 0.11, 0.5, 1, 1.5, 2, 2.05, or in a range defined by any two of the foregoing values. Regardless of any theory, the inventors of this application have found that with the value of a1+b1 being undesirably large (for example, greater than 2.05), the amount of element M2 correspondingly increases, affecting thermal stability of the positive electrode active material and thereby affecting the initial rate performance and cycling performance of the electrochemical device. Selection of the above element M2 and the total molar amount a1+b1 of element M1 and element M2 being controlled within the above ranges facilitate improving the cycling performance of the electrochemical device. The value of b1 is not particularly limited in this application, provided that the objectives of this application can be achieved. For example, 0<b1≤0.05.

In some embodiments of this application, the positive electrode active material further contains element M3, where element M3 includes at least one of F, P, S, or B, and based on the number of moles of element Mn, a molar amount c1% of element M3 ranges from 0.1% to 2%. For example, the molar amount c1% of element M3 may be 0.1%, 0.5%, 1%, 1.5%, 2%, or in a range defined by any two of the foregoing values. Regardless of any theory, the inventors of this application have found that selection of the above element M3, the mass ratio of the boron-containing lithium salt to the positive electrode active material being controlled to be in a range of 0.0001 to 0.01, and the molar amount c1% of element M3 being controlled within the above ranges facilitate forming a structurally stable protection film so as to alleviate dissolution of manganese from the positive electrode plate, thereby improving the cycling performance of the electrochemical device.

In some embodiments of this application, the electrochemical device satisfies at least one of the following characteristics: (iii) 0.1≤a1+c1≤4; or (iv) element M3 contains element F, where based on the number of moles of element Mn, a molar amount of element F is c2%, satisfying 0.05≤c2/c1≤0.5. For example, a value of a1+c1 may be 0.1, 0.5, 1, 1.5, 2, 2.5, 3, 3.5, 4, or in a range defined by any two of the foregoing values. For example, a value of c2/c1 may be 0.05, 0.1, 0.2, 0.3, 0.4, 0.5, or in a range defined by any two of the foregoing values. Regardless of any theory, the inventors of this application have found that a value of a1+c1 and/or c2/c1 being controlled within the above ranges facilitates improving the cycling performance of the electrochemical device. The value of c1% is not particularly limited in this application, provided that the objectives of this application can be achieved. For example, 0.1≤c2≤1.

In some embodiments of this application, the positive electrode active material includes secondary particles, where an average particle size of primary particles in the secondary particles is D1. In some embodiments, Dᵥ50 of the positive electrode active material ranges from 4 µm to 15 µm. For example, Dᵥ50 of the positive electrode active material may be 4µm, 5µm, 6µm, 7µm, 8µm, 9µm, 10µm, 11µm, 12µm, 13µm, 14µm, 15µm, or in a range defined by any two of the foregoing values.

In an embodiment of this application, the average particle size D1 of the primary particles ranges from 0.2 µm to 2 µm. For example, the average particle size D1 of the primary particles is 0.2µm, 0.5µm, 0.8µm, 1µm, 1.5µm, 2µm, or in a range defined by any two of the foregoing values. Regardless of any theory, the inventors of this application have found that the average particle size D1 of the primary particles being controlled within the above ranges facilitates improving the rate performance and cycling performance of the electrochemical device.

In some embodiments of this application, 4≤Dᵥ50/D1≤50. For example, a value of Dᵥ50/D1 may be 4, 5, 10, 15, 20, 25, 30, 35, 40, 45, 50, or in a range defined by any two of the foregoing values. Regardless of any theory, the inventors of this application have found that values of Dᵥ50 of the positive electrode active material and Dᵥ50/D1 being controlled within the above range facilitates improving the rate performance and cycling performance of the electrochemical device. In this application, the secondary particle is a particle formed by agglomeration of the primary particles.

In this application, Dᵥ50 of the positive electrode active material may be determined using a laser particle size analyzer, and the average particle size of the primary particles may be determined using a scanning electron microscope.

In some embodiments of this application, the electrolyte further includes a sulfur-oxygen double bond-containing compound, where the sulfur-oxygen double bond-containing compound includes at least one of 1,3-propane sultone (PS), propenyl-1,3-sultone (PTS), or ethylene sulfate (DTD), and based on a mass of the electrolyte, a mass percentage of the sulfur-oxygen double bond-containing compound ranges from 0.01% to 2%. For example, the mass percentage of the sulfur-oxygen double bond-containing compound may be 0.01%, 0.05%, 0.1%, 0.5%, 1%, 1.5%, 2%, or in a range defined by any two of the foregoing values. Regardless of any theory, the inventors of this application have found that presence of the sulfur-oxygen double bond-containing compound can slow down increase of interface impedance of the electrochemical device during cycling, relieving a problem of rate performance degradation in the electrochemical device during cycling. However, the sulfur-oxygen double bond-containing compound having undesirably high mass percentage (for example, greater than 2%) may provides a relatively thick protection film, possibly leading to a problem such as precipitation of lithium during charge at a high rate. Selection of the above sulfur-oxygen double bond-containing compound and the mass percentage thereof being controlled within the above range can improve the initial rate performance and cycling performance of the electrochemical device and decrease the growth rate of direct current resistance, thereby relieving the problem of rate performance degradation during cycling.

A preparation method of positive electrode active material is not particularly limited in this application, provided that the objectives of this application can be achieved. For example, the preparation method of positive electrode active material may include but is not limited to the following steps: mixing raw materials well, and calcinating the mixed materials with controlled ventilation and under a condition of a specified temperature rise rate, where a temperature for calcination is Tₓ and a time for calcination is t'_{y}, followed by cooling with a specific controlled cooling rate, to obtain a positive electrode active material. The temperature for calcination Tₓ and the time for calcination t'_{y} are not particularly limited in this application, provided that the objectives of this application can be achieved. For example, the temperature rise rate is 5°C/min, the temperature for calcination Tₓ is 800°C to 900°C, the time for calcination t'_{y} is 15 h to 50 h, and the cooling rate is 3°C/min. The above raw materials are not particularly limited in this application, provided that the objectives of this application can be achieved. For example, the raw materials may include but are not limited at least one of MnO₂, Li₂CO₃, Al₂O₃, or Co₂O₃.

The temperature rise rate, the cooling rate, the time for calcination, and the temperature for calcination typically affect factors such as particle size of the positive electrode active material, phase uniformity of metal and oxygen ions, and amount of oxygen defects, thereby affecting physical and chemical performance of the positive electrode active material. For example, with reduction of the temperature for calcination and/or of the time for calcination, the particle size of the positive electrode active material decreases; and with rise of the temperature for calcination and/or extension of the time for calcination, the particle size of the positive electrode active material increases.

In this application, a method for introducing element M1, element M2, and element M3 into the positive electrode active material is not particularly limited, provided that the objectives of this application can be achieved. For example, during the preparation of the positive electrode active material, a compound containing element M1, element M2, or element M3 may be optionally added. The compound containing element M1 is not particularly limited in this application, provided that the objectives of this application can be achieved. For example, the compound containing element M1 may include but is not limited to at least one of NbzOs, MgO, TiO₂, WO₃, Ga₂O₃, ZrO₂, Y₂O₃, V₂O₅, SrO₂, MoO₃, RuO₂, AgO, SnO₂, Au₂O₃, La₂O₃, CeO₂, Pr₂O₃, Nd₂O₃, Sm₂O₃, or Gd₂O₃. The compound containing element M2 is not particularly limited in this application, provided that the objectives of this application can be achieved. For example, the compound containing element M2 may include but is not limited to at least one of Fe₂O, CuO₂, CrO₃, or ZnO₂. The compound containing element M3 is not particularly limited in this application, provided that the objectives of this application can be achieved. For example, the compound containing element M3 may include but is not limited to at least one of LiF, HBO₃, Li₃PO₄, or Li₂SO₄.

In this application, a molar ratio of different elements in the positive electrode active material is obtained by disassembling the electrochemical device containing the positive electrode active material in a state of charge of 0% to obtain the positive electrode plate and calculating by using amounts of different elements obtained from tests on the positive electrode plate.

The positive electrode plate typically includes a positive electrode current collector. In this application, the positive electrode current collector is not particularly limited, provided that the objectives of this application can be achieved. For example, the positive electrode current collector may include but is not limited to an aluminum foil, an aluminum alloy foil, or a composite current collector. In this application, thickness of the positive electrode current collector is not particularly limited, provided that the objectives of this application can be achieved. For example, the thickness is 8 µm to 12 µm. In this application, a positive electrode material layer may be disposed on one surface in a thickness direction of the positive electrode current collector or on two surfaces in the thickness direction of the positive electrode current collector. It should be noted that the "surface" herein may be an entire zone or a partial zone of the positive electrode current collector. This is not particularly limited in this application, provided that the objectives of this application can be achieved.

In this application, the positive electrode material layer includes the positive electrode active materials according to any one of the foregoing embodiments in this application. The positive electrode material layer may further include a binder. The binder is not particularly limited in this application, provided that the objectives of this application can be achieved. For example, the binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, polyimide, polyamideimide, styrene-butadiene rubber, or polyvinylidene fluoride.

In this application, the positive electrode material layer may further include a conductive agent. The conductive agent is not particularly limited in this application, provided that the objectives of this application can be achieved. For example, the conductive agent may include but is not limited to at least one of conductive carbon black (Super P), a carbon nanotubes (CNTs), carbon fiber, flake graphite, Ketjen black, graphene, a metal material, or a conductive polymer. The above carbon nanotubes may include but is not limited to single-walled carbon nanotubes and/or multi-walled carbon nanotubes. The above carbon fiber may include but is not limited to vapor-phase carbon fiber (VGCF) and/or nano-carbon fiber. The above metal material may include but is not limited to metal powder and/or metal fiber. Specifically, the metal may include but is not limited to at least one of copper, nickel, aluminum, or silver. The above conductive polymer may include but is not limited to at least one of polyphenylene derivative, polyaniline, polythiophene, polyacetylene, or polypyrrole.

In this application, the electrochemical device further includes a negative electrode plate. The negative electrode plate is not particularly limited in this application, provided that the objectives of this application can be achieved. For example, the negative electrode plate typically includes a negative electrode current collector and a negative electrode material layer. In this application, the negative electrode material layer may be disposed on one surface in a thickness direction of the negative electrode current collector or on two surfaces in the thickness direction of the negative electrode current collector. It should be noted that the "surface" herein may be an entire zone or a partial zone of the negative electrode current collector. This is not particularly limited in this application, provided that the objective of this application can be achieved.

In this application, the negative electrode current collector is not particularly limited, provided that the objectives of this application can be achieved. For example, the negative electrode current collector may include but is not limited to a copper foil, a copper alloy foil, a nickel foil, a stainless steel foil, a titanium foil, foamed nickel, foamed copper, or a composite current collector. In this application, thickness of the negative electrode current collector is not particularly limited, provided that the objectives of this application can be achieved. For example, the thickness of the negative electrode current collector is 4 µm to 12 µm.

In this application, the negative electrode material layer includes a negative electrode active material, where the negative electrode active material is not particularly limited, provided that the objective of this application can be achieved. For example, the negative electrode active material may include but is not limited to at least one of natural graphite, artificial graphite, mesocarbon microbeads, hard carbon, soft carbon, silicon, silicon-carbon composite, or silicon oxide.

In this application, the negative electrode material layer may further include a conductive agent. The conductive agent is not particularly limited in this application, provided that the objectives of this application can be achieved. For example, the conductive agent may include but is not limited to at least one of the above conductive agents.

In this application, the negative electrode material layer may further include a binder. The binder is not particularly limited in this application, provided that the objectives of this application can be achieved. For example, the conductive agent may include but is not limited to at least one of the above binders.

Optionally, the negative electrode plate may further include a conductive layer and the conductive layer is sandwiched between the negative electrode current collector and the negative electrode material layer. The constitution of the conductive layer is not particularly limited in this application and may be a conductive layer commonly used in the art. The conductive layer may include but is not limited to the above conductive agents and the above binders.

A separator is not particularly limited in this application, provided that the objectives of this application can be achieved. For example, the separator may include but is not limited to at least one of a polyolefin (PO) type separator mainly made of polyethylene (PE), polypropylene (PP), and polytetrafluoroethylene, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, a spinning film, preferably being made of PP. The separator in this application may have a porous structure, where a size of an aperture is not particularly limited, provided that the objectives of this application can be achieved. For example, the size of the aperture may be 0.01 µm to 1 µm.

For example, the separator may include a substrate layer and a surface treatment layer. The substrate layer may be a non-woven fabric, film, or composite film that have a porous structure. The material of the substrate layer may include but is not limited to at least one of polyethylene, polypropylene, polyethylene terephthalate, or polyimide. Optionally, a polypropylene porous membrane, a polyethylene porous membrane, polypropylene nonwoven fabric, polyethylene nonwoven fabric, or polypropylene-polyethylene-polypropylene porous composite membrane can be used. Optionally, a surface treatment layer is disposed on at least one surface of the substrate layer, and the surface treatment layer may be a polymer layer or an inorganic material layer, or a layer formed by mixing a polymer and an inorganic material.

The inorganic material layer may include but is not limited to inorganic particles and an inorganic material layer binder. The inorganic particle is not particularly limited in this application. For example, the inorganic particle may include but is not limited to at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic material layer binder is not particularly limited in this application. For example, the inorganic material layer binder may include but is not limited to at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer may include but is not limited to at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

In this application, the electrolyte may further include a lithium salt. The lithium salt is not particularly limited in this application, provided that the objectives of this application can be achieved. For example, the lithium salt may include but is not limited to at least one of LiPF₆, LiClO₄, LiCH₃SO₃, LiCF₃SO₃, LiN(SO₂CF₃)₂, or LiC(SO₂CF₃)₃. Preferably, the lithium salt includes LiPF₆.

In this application, the electrolyte may further include a non-aqueous solvent. The non-aqueous solvent is not particularly limited in this application, provided that the objectives of this application can be achieved. For example, the non-aqueous solvent may include but is not limited to at least one of a carbonate compound or a carboxylate compound. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate compound may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of ethyl acetate, n-propyl acetate, tert-butyl acetate, methyl propionate, ethyl propionate, propyl propionate, or γ-butyrolactone.

The electrochemical device in this application is not particularly limited, and may include any device in which an electrochemical reaction occurs. In some embodiments, the electrochemical device may include but is not limited to a lithium metal secondary battery, a lithium-ion secondary battery (lithium-ion battery), a lithium polymer secondary battery, or a lithium-ion polymer secondary battery.

A preparation process of the electrochemical device is well known to those skilled in the art and is not particularly limited in this application. For example, the preparation process of electrochemical device may include but is not limited to the following steps: the positive electrode plate, the separator, and the negative electrode plate are stacked in sequence and wound and folded based on needs to obtain an electrode assembly having a winding structure; the electrode assembly is put into a packaging bag, the electrolyte is injected into the packaging bag, and the packaging bag is sealed to obtain the electrochemical device; or the positive electrode plate, the separator, and the negative electrode plate are stacked in sequence, then the electrode assembly having a laminated structure is entirely put into the packaging bag, the electrolyte is injected into the packaging bag, and the packaging bag is sealed to obtain the electrochemical device. In addition, an overcurrent prevention element, a guide plate, and the like may be placed in the packaging bag based on needs to prevent pressure increase, over-charge, and over-discharge in the electrochemical device.

A second aspect of this application provides an electronic device, including the electrochemical device according to any one of foregoing embodiments of this application. The electrochemical device according to this application has good cycling performance and rate performance, and thus the electronic device according to this application has a relatively long service life and good performance.

The electronic device in this application is not particularly limited and may be any known electronic device in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

### Examples

### Test method and device:

### Rate performance test:

At a circumstance of 25°C, the lithium-ion battery was charged to a voltage of 4.22 V with a constant current at a rate of 0.5C, and then charged to a current of 0.02C with a constant voltage. After left standing for 60 min, the lithium-ion battery was discharged to a voltage of 2.8 V with a constant current at a rate of 0.2C, and the discharge capacity was recorded as D₀. After left standing for 5 min, the lithium-ion battery was charged to 4.22 V with a constant current at a rate of 0.5C, and then was charged to a current of 0.02C with a constant voltage. After left standing for 60 min, the lithium-ion battery was discharged to a voltage of 2.8 V with a constant current at a rate of 5C, and the discharge capacity was recorded as D'. Capacity retention rate=D'/D₀×100%. The initial rate performance of the lithium-ion battery is rate performance data determined when the number of cycles of the lithium-ion battery is less than 10.

### Cycling performance test:

At a circumstance of 25°C, the lithium-ion battery was charged to a voltage of 4.22 V with a constant current at a rate of 1C, and then charged to a current of 0.02C with a constant voltage. After left standing for 60 min, the lithium-ion battery was discharged to a voltage of 2.8 V with a constant current at a rate of 1C, and the discharge capacity was recorded as D3. After 500 cycles, the discharge capacity was recorded as D4, and the cycling capacity retention=D4/D3×100%.

### Direct current resistance (Rcc) test:

The lithium-ion battery was left standing for 5 min at a circumstance of 25°C. Then the battery was charged to a voltage of 4.2 V with a constant current at a rate of 0.5C, and charged to a current of 0.025C with a constant voltage of 4.2 V After left standing for 5 min, the lithium-ion battery was discharged to a voltage of 2.8 V at a rate of 0.2C, and the discharge capacity at that time was recorded as an actual capacity of the lithium-ion battery. Rates were calculated based on the actual capacity in the following tests.

Then, after left standing for 5 min at a circumstance of 25°C, the lithium-ion battery was charged to a voltage of 4.2 V with a constant current at a rate of 0.5C, then charged to a current of 0.025C with a constant voltage of 4.2 V, and left standing for 120 min. The lithium-ion battery had a state of charge of 100%. Subsequently, the battery was discharged for 10 seconds at a rate of 0.1C, and the discharge current was recorded as I₁ and the voltage after discharge was recorded as Vi. During that period, the voltage, current, and time were sampled at an interval of 100 milliseconds. Then the lithium-ion battery was discharged for 360 seconds at a rate of 1C, and the discharge current was recorded as I₂ and the voltage of discharge for 1 second was recorded as V₂. During that period, the voltage, current, and time were sampled at an interval of 100 milliseconds. The direct current resistance R of the lithium-ion battery was calculated through the following formula: direct current resistance R=(V₁-V₂)/(I₂-I₁).

Before cycling, the direct current resistance R determined at a battery state of charge of 50% was recorded as R1, and after 500 cycles, the direct current resistance R determined at a battery state of charge of 50% was recorded as R2, where a growth rate of direct current resistance=R2/R1×100%.

### Particle size test:

0.02 g of materials to be tested was added into a 50ml clean beaker, and 20 ml of deionized water was added into the breaker, with a few drops of surfactant sodium hexametaphosphate at a mass concentration of 1% added to make the powder completely dispersed in the water. Then, the powder was subjected to ultrasound for 5 min in a 120 W ultrasonic cleaning machine, and particle size distribution was tested with a MasterSizer 2000. Dᵥ50 was a particle size at 50% in the cumulative volume distribution as determined using a laser scattering particle size analyzer. The average particle size D1 of the primary particles was determined using a scanning electron microscope.

### Example 1-1

### <Preparation of positive electrode active material>

MnO₂, Li₂CO₃, Al₂O₃, and Co₃O₄ were mixed at a molar ratio 1:1.96:0.03:0.01 of Li:Mn:Al:Co, and the temperature for calcination Tₓ was set as 830°C and the time for calcination t'_{y} was set as 35 h, so as to obtain LiMn_{1.96}Al_{0.03}Co_{0.01}O₄, a positive electrode active material containing a morphology of the secondary particles formed by agglomeration of the primary particles. Dᵥ50 of the secondary particle MnOz was 11.8 µm, Dᵥ50 of the positive electrode active material was 12.4 µm, and the average particle size D1 of the primary particle was 0.6 µm.

### <Preparation of positive electrode plate>

The resulting positive electrode active material, a conductive agent acetylene black, and a binder polyvinylidene difluoride were mixed at a mass ratio of 96.5:2:1.5, with N-methylpyrrolidone (NMP) added, and stirred to obtain a uniform positive electrode slurry using a vacuum mixer, where the positive electrode slurry had a solid content of 70%. The positive electrode slurry was evenly applied on one surface of a positive electrode current collector aluminum foil having a thickness of 12 µm, and then the aluminum foil was dried and processed at 120°C for 1 h, to obtain a positive electrode plate with one surface coated with the positive electrode material layer. Then, the foregoing steps were repeated on the other surface of the aluminum foil to obtain a positive electrode plate coated with the positive electrode material layer on two surfaces, where a single-sided coating mass of the positive electrode material layer was 20 mg/cm². Then, after the resulting positive electrode plate underwent cold pressing, cutting, and slitting and was welded with a tab, followed by drying for 1 h in a 120°C vacuum condition, a positive electrode plate of 74 mm×867 mm was obtained.

### <Preparation of negative electrode plate>

A negative active material artificial graphite, styrene-butadiene rubber (SBR), and carboxymethyl cellulose (CMC) were mixed at a mass ratio of 96:2:2, with the deionized water added, to obtain a negative electrode slurry by using a vacuum mixer, where the negative electrode slurry had a solid content of 75%. The negative electrode slurry was evenly applied on one surface of a negative electrode current collector copper foil having a thickness of 12 µm, and the copper foil was dried at 120°C to obtain a negative electrode plate having a coating thickness of 130 µm and with one surface coated with the negative electrode material layer. The foregoing steps were repeated on the other surface of the aluminum foil to obtain a negative electrode plate coated with the negative electrode material layer on two surfaces, where a single-sided coating mass of the negative electrode material layer was 6.5 mg/cm². Then, after the resulting negative electrode plate underwent cold pressing, cutting, and slitting and was welded with a tab, followed by drying for 1 h in a 120°C vacuum condition, a negative electrode plate of 78 mm×875 mm was obtained.

### <Preparation of electrolyte>

In a dry argon atmosphere glove box, an organic solvent obtained by mixing PC, EC, and DEC at a mass ratio of 1:1:1, and a lithium salt LiPF₆ and a boron-containing lithium salt LiBF₄ were added in the organic solvent, followed by dissolving and mixing to uniformity, to obtain an electrolyte. Based on a total mass of the electrolyte, LiPF₆ accounted for an amount of 12.5% of the electrolyte. Mass ratio of LiBF₄ to the positive electrode active material is shown in the following tables.

### <Preparation of separator>

A porous PE film (provided by Celgard) having a thickness of 7 µm was used.

### <Preparation of lithium-ion battery>

The resulting positive electrode plate, separator, and negative electrode plate were stacked in sequence, so that the separator was sandwiched between the positive electrode plate and the negative electrode plate for separation, and an electrode assembly was obtained by winding. The electrode assembly was placed in an aluminum-plastic packaging bag and was injected with the electrolyte after being dried, followed by vacuum packaging, standing, formation, degassing, and trimming, to obtain the lithium-ion battery. An injection amount of the electrolyte was controlled at 4.2 g/Ah, and a mass ratio of the boron-containing lithium salt to the positive electrode active material was set at 0.002. An upper limit voltage for formation was 4.15 V, the temperature for formation was 70°C, and the standing time for formation was 2 h.

### Example 1-2 to Example 1-10, and Example 1-19

These examples were the same as Example 1-1 except that related preparation parameters were adjusted based on Table 1.

### Example 1-11 to Example 1-18

These examples were the same as Example 1-1 except that in <Preparation of positive electrode active material>, the molar ratio of the raw materials was adjusted based on the molar ratio of different elements in the positive electrode active material, and the mass percentage of the boron-containing lithium salt and the mass ratio of the boron-containing lithium salt to the positive electrode active material were adjusted based on Table 1.

### Example 2-1 to Example 2-7

In <Preparation of positive electrode active material>, these examples were the same as Example 1-5 except that the compound containing M1 was added as a raw material based on Table 2, and the molar ratio of the raw materials was adjusted based on the molar ratio of the different elements in the positive electrode active material.

### Examples 2-8 and Examples 2-9

In <Preparation of positive electrode active material>, these examples are the same as the parameters in Example 1-5 except that the compound containing M1 and the compound containing M2 were added as raw materials based on Table 2, and the molar ratio of the raw materials was adjusted based on the molar ratio of the different elements in the positive electrode active material.

### Examples 2-10 and Examples 2-11

In <Preparation of positive electrode active material>, these examples were the same as Example 1-5 except that the compound containing M3 was added as a raw material based on Table 3, and the molar ratio of the raw materials was adjusted based on the molar ratio of the different elements in the positive electrode active material.

### Example 2-12 to Example 2-15

In <Preparation of positive electrode active material>, these examples were the same as Example 2-1 except that the compound containing M3 was added as a raw material based on Table 3, and the molar ratio of the raw materials was adjusted based on the molar ratio of the different elements in the positive electrode active material.

### Example 2-16

In <Preparation of positive electrode active material>, this example was the same as Example 2-1 except that the compound containing M2 and the compound containing M3 were added as raw materials based on Table 3, and the molar ratio of the raw materials was adjusted based on the molar ratio of the different elements in the positive electrode active material.

**Example 3-1** to **Example 3-5** were the same as Example 1-5 except that related preparation parameters were adjusted based on Table 4.

**Example 4-1** to **Example 4-6** were the same as Example 1-5 except that in <Preparation of electrolyte>, the sulfur-oxygen double bond-containing compound was further added, and related preparation parameters were adjusted based on Table 5.

**Comparative Example 1-1** to **Comparative Example 1-4** were the same as Example 1-1 except that related preparation parameters were adjusted based on Table 1, or the molar ratio of the raw materials was adjusted based on the molar ratio of the different elements in the positive electrode active material.

The preparation parameters and performance of Examples and Comparative Examples are shown in Table 1 to Table 5.

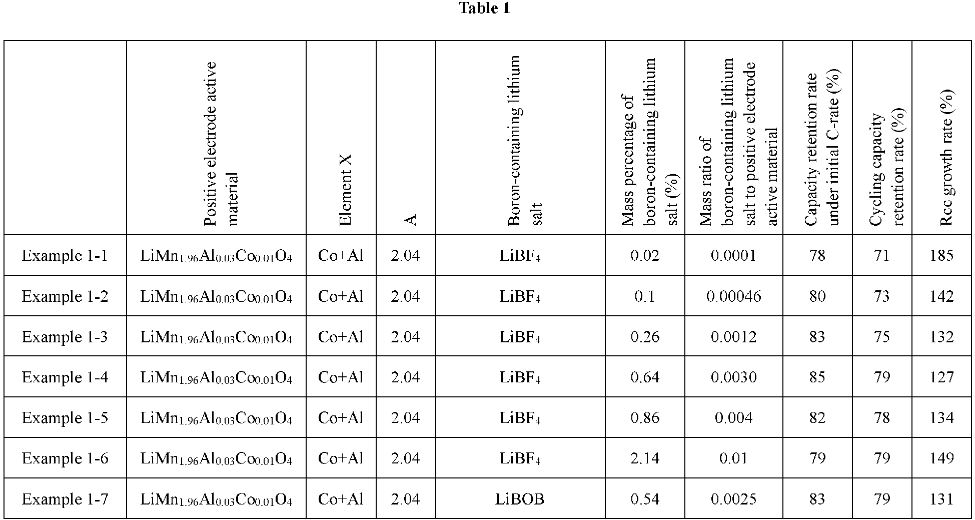

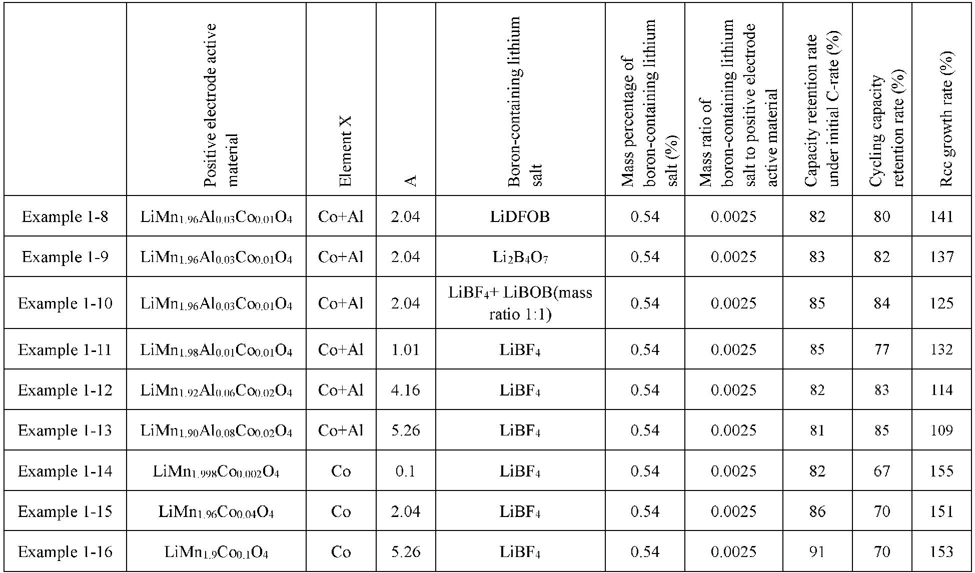

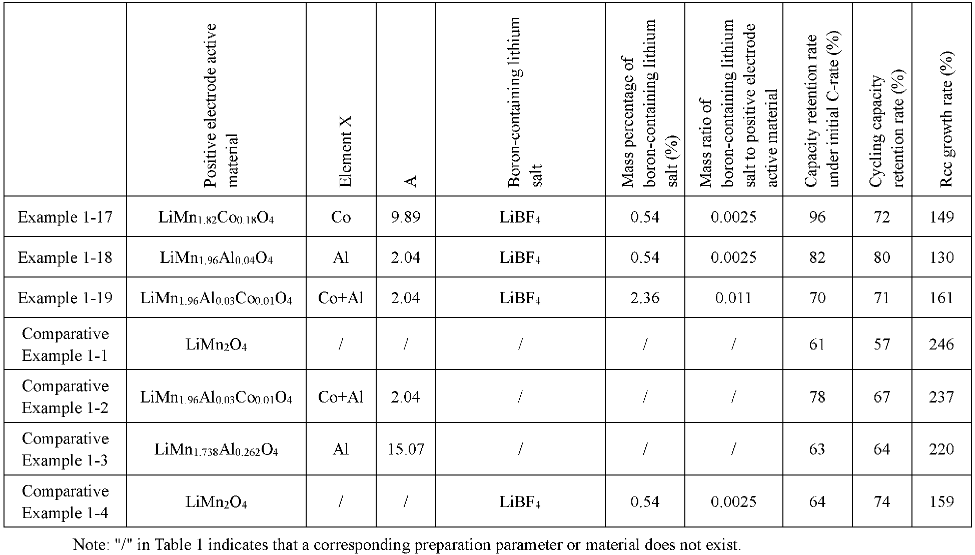

It can be learned from Example 1-1 to Example 1-18 and Comparative Example 1-1 to Comparative Example 1-4 that, when the value of the molar ratio A of element X to element Mn and the mass ratio of the boron-containing lithium salt to the positive electrode active material both fall in the range of this application, the resulting electrochemical device has both good initial rate performance and cycling performance and has a relatively low growth rate of Rcc. It can be learned from Examples 1-1 to Example 1-19 that when the mass percentage of the boron-containing lithium salt falls in the range of this application, the resulting electrochemical device has better comprehensive performance. Therefore, this means that for the electrochemical device according to this application, a synergistic effect of the positive electrode active material and the electrolyte can improve the electrochemical device in both rate performance and cycling performance and decrease the growth rate of Rcc.

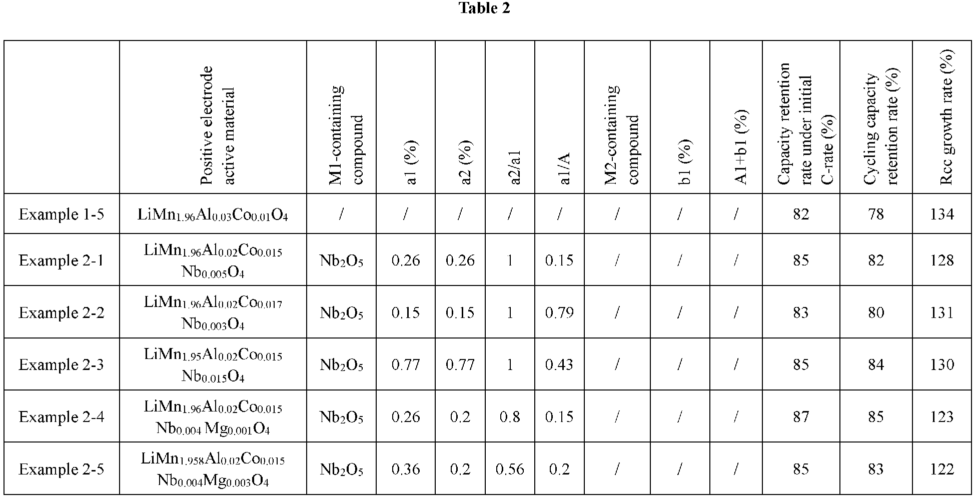

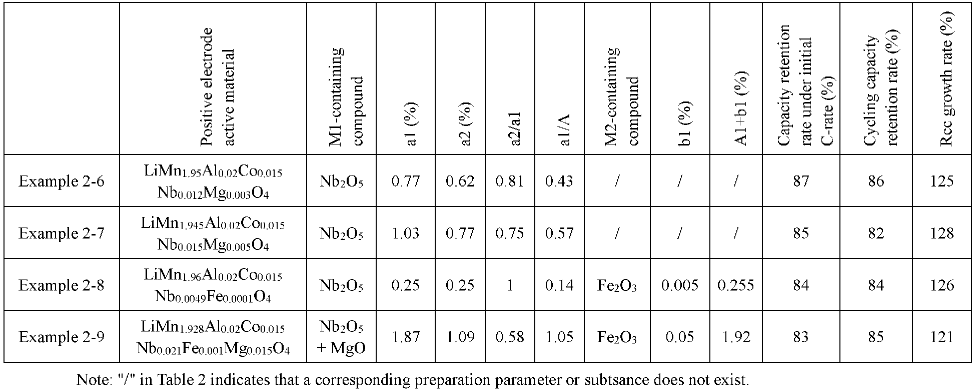

Introducing element M1 and/or element M2 into the positive electrode active material may typically affect the performance of the electrochemical device, for example, the rate performance, the cycling performance, and the growth rate of Rcc. It can be learned from Example 1-5 and Example 2-1 to Example 2-7 that introducing element M1 into the positive electrode active material can further improve the initial rate performance and cycling performance of the electrochemical device and decrease the growth rate of Rcc. It can be learned from Example 2-1 to Example 2-7 that, when the values of a1, a2/a1, and al/A are in the range of this application, the resulting electrochemical device has better initial rate performance and cycling performance and has a relatively low growth rate of Rcc. It can be learned from Example 1-5, Example 2-8, and Example 2-9 that introducing both element M1 and element M2 into the positive electrode active material can further improve the initial rate performance and cycling performance of the electrochemical device and decrease the growth rate of Rcc. It can be learned from Example 2-8 and Example 2-9 that, when the value of a1+b1 is in the range of this application, the resulting electrochemical device has good initial rate performance and cycling performance and has a relatively low growth rate of Rcc.

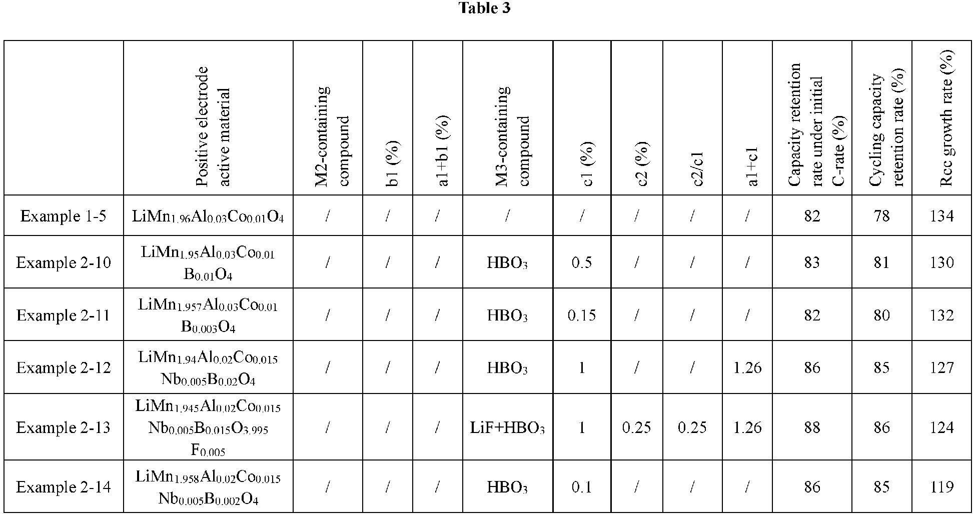

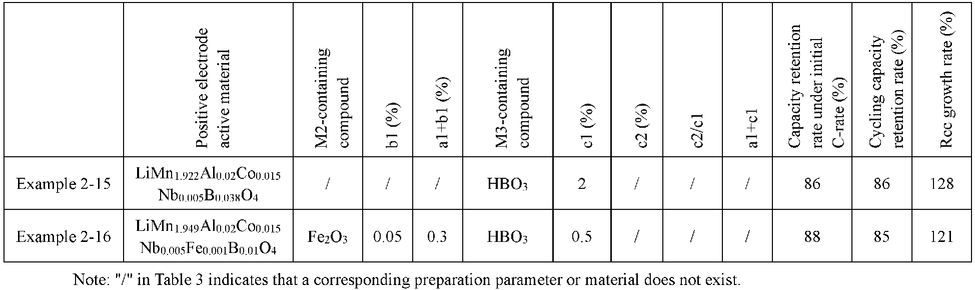

Introducing at least one of element M1, element M2, or element M3 into the positive electrode active material may typically affect the performance of the electrochemical device, for example, the initial rate performance, the cycling performance, and the growth rate of Rcc. It can be learned from Example 1-5, Example 2-10, and Example 2-11 that introducing element M3 into the positive electrode active material can further improve the initial rate performance and cycling performance of the electrochemical device and decrease the growth rate of Rcc. It can be learned from Example 1-5 and Example 2-12 to Example 2-15 that introducing both element M1 and element M3 into the positive electrode active material can further improve the initial rate performance and cycling performance of the electrochemical device and decrease the growth rate of Rcc. It can be learned from Example 2-10 to Example 2-15 that, when the value of at least one of c1, c2/c1, or a1+c1 is in the range of this application, the resulting electrochemical device has good initial rate performance and cycling performance and has a relatively low growth rate of Rcc. It can be learned from Example 1-5 and Example 2-16 that introducing element M1, element M2, and element M3 into the positive electrode active material can further improve the initial rate performance and cycling performance of the electrochemical device and decrease the growth rate of Rcc.

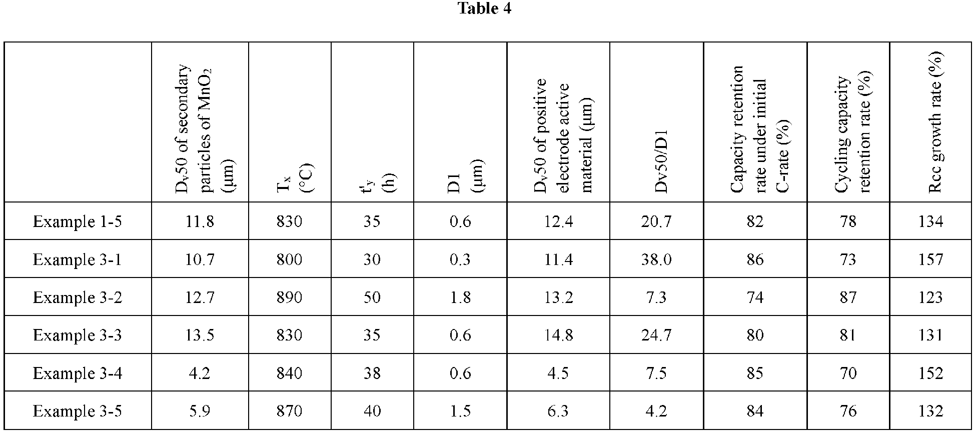

The particle sizes of the primary particle and the positive electrode active material may typically affect the performance of the electrochemical device, for example, the rate performance, the cycling performance, and the growth rate of Rcc. It can be learned from Example 1-5 and Example 3-1 to Example 3-5 that when the particle sizes of the primary particle and the positive electrode active material fall in the range of this application, that is, the average particle size D1 of the primary particle, Dᵥ50 of the positive electrode active material, and the value of Dᵥ50/D1 fall in the ranges of this application, the resulting electrochemical device has good comprehensive performance.

**Table 5**

| | Sulfur-oxygen double bond-containing compound | Mass percentage of sulfur-oxygen double bond-containing compound (%) | Capacity retention rate under initial C-rate (%) | Cycling capacity retention rate (%) | Rcc growth rate (%) |
|---|---|---|---|---|---|
| Example 1-5 | / | / | 82 | 78 | 134 |
| Example 4-1 | 1,3-propane sultone | 0.02 | 84 | 81 | 129 |
| Example 4-2 | 1,3-propane sultone | 0.80 | 86 | 89 | 112 |
| Example 4-3 | 1,3-propane sultone | 2 | 84 | 87 | 119 |
| Example 4-4 | Ethylene sulfate | 0.80 | 85 | 88 | 111 |
| Example 4-5 | Ethylene sulfate+propane sultone | 0.4+0.4 | 88 | 89 | 106 |
| Example 4-6 | Propenyl-1,3-sultone | 1.2 | 86 | 88 | 112 |

| | | | | | |
|---|---|---|---|---|---|
| Note: "/" in Table 5 indicates that a corresponding preparation parameter or material does not exist. | | | | | |

Adding the sulfur-oxygen double bond-containing compound into the electrolyte may typically affect the performance of the electrochemical device, for example, the rate performance, the cycling performance, and the growth rate of Rcc. It can be learned from Example 1-5 and Example 4-1 to Example 4-6 that adding the sulfur-oxygen double bond-containing compound in the electrolyte can further improve rate performance and cycling performance of the electrochemical device and decrease the growth rate of Rcc; and when a mass percentage of the sulfur-oxygen double bond-containing compound falls in the range of this application, the resulting electrochemical device has good rate performance and cycling performance and has a lower growth rate of Rcc.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical device, comprising a positive electrode plate and an electrolyte, wherein
the positive electrode plate comprises a positive electrode material layer, the positive electrode material layer comprises a positive electrode active material, and the positive electrode active material comprises element Mn and element X, wherein the element X comprises at least one of element Co or element Al, and a molar ratio of the element X to the element Mn is A%, A ranging from 0.1 to 10; and the electrolyte comprises a boron-containing lithium salt.

2. The electrochemical device according to claim 1, wherein the boron-containing lithium salt comprises at least one of lithium tetrafluoroborate, lithium difluorooxalatoborate, lithium bisoxalatoborate, or lithium tetraborate.

3. The electrochemical device according to claim 1, wherein a mass ratio of the boron-containing lithium salt to the positive electrode active material ranges from 0.0001 to 0.01.

4. The electrochemical device according to claim 1, wherein based on a mass of the electrolyte, a mass percentage of the boron-containing lithium salt ranges from 0.01% to 2.2%.

5. The electrochemical device according to claim 1, wherein the positive electrode active material further comprises element M1, wherein the element M1 comprises at least one of Nb, Mg, Ti, W, Ga, Zr, Y, V, Sr, Mo, Ru, Ag, Sn, Au, La, Ce, Pr, Nd, Sm, or Gd, and based on a number of moles of the element Mn, a molar amount a1% of the element M1 ranges from 0.1% to 2%.

6. The electrochemical device according to claim 5, wherein the electrochemical device satisfies at least one of the following characteristics:
(i) 0.14≤a1/A≤0.55; or
(ii) the element M1 comprises element Nb, wherein based on the number of moles of the element Mn, a molar amount of the element Nb is a2%, satisfying 0.3≤a2/a1≤1.

7. The electrochemical device according to claim 1, wherein the positive electrode active material further comprises element M2, and the element M2 comprises at least one of Fe, Cu, Cr, or Zn.

8. The electrochemical device according to claim 7, wherein the positive electrode active material further comprises element M1, the element M1 comprises at least one of Nb, Mg, Ti, W, Ga, Zr, Y, V, Sr, Mo, Ru, Ag, Sn, Au, La, Ce, Pr, Nd, Sm, or Gd, and based on a number of moles of the element Mn, a molar amount of the element M1 is a1%, and a molar amount of the element M2 is b1%, satisfying 0.1<a1+b1≤2.05.

9. The electrochemical device according to claim 1, wherein the positive electrode active material further comprises element M3, the element M3 comprises at least one of F, P, S, or B, and based on a number of moles of the element Mn, a molar amount c1% of the element M3 ranges from 0.1% to 2%.

10. The electrochemical device according to claim 9, wherein the positive electrode active material further comprises element M1, the element M1 comprises at least one of Nb, Mg, Ti, W, Ga, Zr, Y, V, Sr, Mo, Ru, Ag, Sn, Au, La, Ce, Pr, Nd, Sm, or Gd, based on the number of moles of the element Mn, a molar amount of the element M1 is a1%, and the positive electrode active material satisfies at least one of the following characteristics:
(iii) 0.1≤a1+c1≤4; or
(iv) the element M3 comprises element F, wherein based on the number of moles of the element Mn, a molar amount of the element F is c2%, satisfying 0.05≤c2/c1≤0.5.

11. The electrochemical device according to claim 1, wherein the positive electrode active material comprises secondary particles, an average particle size of primary particles in the secondary particles is D1, and the positive electrode active material satisfies at least one of the following characteristics:
(1) Dᵥ50 of the positive electrode active material ranges from 4 µm to 15 µm;
(2) the average particle size D1 of the primary particles ranges from 0.2 µm to 2 µm; or
(3) 4≤Dᵥ50/D1≤50, wherein Dᵥ50 is a particle size of a positive electrode active material at 50% in the cumulative volume distribution as determined using a laser scattering particle size analyzer.

12. The electrochemical device according to claim 1, wherein the electrolyte further comprises a sulfur-oxygen double bond-containing compound, the sulfur-oxygen double bond-containing compound comprises at least one of 1,3-propane sultone, propenyl-1,3-sultone, or ethylene sulfate, and based on a mass of the electrolyte, a mass percentage of the sulfur-oxygen double bond-containing compound ranges from 0.01% to 2%.

13. An electronic device, comprising the electrochemical device according to any one of claims 1 to 12.
